# FASCICULE DE BREVET EUROPEEN

(11) **EP 1 366 990 B1**
(45) Date de publication et mention de la délivrance du brevet: **17.05.2006**
(21) Numéro de dépôt: 03291147.1
(22) Date de dépôt: 16.04.2003
(51) Int. Cl.: B64G 1/50

(54) **Dispositif de transfert de chaleur pour satellite comprenant un évaporateur**
Wärmetauschvorrichtung mit Verdampfer für Satellit
Heat transfer device for satellite comprising an evaporator

(30) Priorité: 30.05.2002 FR 0206638
(43) Date de publication de la demande: 03.12.2003
(73) Titulaire: ALCATEL, 75008 Paris (FR)
(72) Inventeur: Jacque, Bernard, 31000 Toulouse (FR); Texier, Emmanuel, 06150 Cannes la Bocca (FR); Cluzet, Gérard , Résidence Les Terrasses Bât. F, 06210 Mandelieu (FR); Tjiptahardja, Tisna, 06150 Cannes La Bocca (FR); Amidieu, Marcel, 66300 Ponteilla (FR)
(74) Mandataire: Chaffraix, Sylvain

(56) Documents cités:
- EP-A- 0 776 827
- EP-A- 1 031 511
- US-A- 4 880 050
- PATENT ABSTRACTS OF JAPAN vol. 1999, no. 01, 29 janvier 1999 (1999-01-29) -& JP 10 281671 A (AKUTORONIKUSU KK;AKACHI HISATERU), 23 octobre 1998 (1998-10-23)
- PATENT ABSTRACTS OF JAPAN vol. 011, no. 082 (M-571), 12 mars 1987 (1987-03-12) -& JP 61 237994 A (MITSUBISHI HEAVY IND LTD), 23 octobre 1986 (1986-10-23)
- PATENT ABSTRACTS OF JAPAN vol. 1999, no. 12, 29 octobre 1999 (1999-10-29) -& JP 11 173773 A (NEC NIIGATA LTD), 2 juillet 1999 (1999-07-02)

## Description

La présente invention concerne un dispositif de transfert de chaleur, adapté à l'évacuation de la puissance dissipée générée par des équipements embarqués à bord d'un véhicule spatial et en particulier d'un satellite.

Lors du fonctionnement en orbite d'un véhicule spatial, un certain nombre d'équipements électriques et électroniques embarqués dissipent une quantité de chaleur, quantité indexée sur le rendement intrinsèque de ces équipements et qui peut s'avérer importante sur certains équipements de forte puissance. Afin de maintenir l'environnement thermique de ces équipements dans des plages de températures compatibles de leur fonctionnement et de leurs performances, il est nécessaire de prévoir un dispositif de transfert de chaleur pour collecter, transporter puis évacuer cette chaleur vers l'espace.

Un certain nombre de systèmes sont connus actuellement pour effectuer ce transfert de chaleur. Ces systèmes comprennent un dispositif de transport et de répartition de la chaleur ainsi qu'un dispositif de transfert de chaleur par rayonnement . Le principe du dispositif de transport de chaleur est fondé sur l'utilisation d'un fluide circulant entre la zone chaude où la puissance thermique est dissipée, et une zone plus froide où cette puissance thermique absorbée par le fluide est évacuée vers le milieu extérieur par radiation par un ou plusieurs radiateurs fixes ou déployables. Le principe de fonctionnement des dispositifs repose donc sur leur capacité de transport et d'échange ainsi que, pour les systèmes diphasiques, sur les propriétés d'évaporation/condensation du fluide (chaleur latente du fluide).

Un premier type de dispositifs de transport de chaleur connu est le caloduc. Ce système comprend un tube métallique rigide (en aluminium par exemple) dans lequel circule un fluide caloporteur (en général de l'ammoniac), et utilise les propriétés de changement de phase liquide-vapeur ainsi que les propriétés de capillarité des liquides. Ainsi, un caloduc est un système diphasique fermé dans lequel la vapeur créée au niveau de la zone chaude (dite zone d'évaporation) est aspirée vers une zone plus froide (où la pression est moins élevée) et s'y condense sur la paroi métallique du tube. La phase liquide du fluide utilisé glisse le long de la paroi métallique du tube en sens inverse de l'écoulement de la phase vapeur du fluide, qui reste confinée au centre du tube. Ce retour du fluide le long de la paroi est assuré par une structure capillaire (mèche ou rainures longitudinales) reliant les deux extrémités du tube et qui joue à la fois le rôle de pompe capillaire et de séparateur des deux phases liquide-vapeur

Les dispositifs de transfert de chaleur à base de caloducs, sont fréquemment utilisés dans le domaine des satellites mais présentent néanmoins deux limitations majeures. En tout premier lieu, la rigidité mécanique des caloducs ne permet pas d'envisager leur utilisation pour du transport de chaleur vers des surfaces radiatives déployables en orbite (radiateurs déployables) qui nécessite une reconfiguration dans l'espace du chemin thermique. En second lieu, la limitation de leurs performances en termes de capacité de transport de chaleur (de l'ordre de quelques centaines de W.m) et de distance de transport nécessite, pour les satellites de télécommunications de forte puissance, l'utilisation de dispositifs différents où le transport de chaleur peut être effectué sur des distances plus importantes, le long de chemin thermique plus complexe parfois tridimensionnel et reconfigurable en vol (déploiement de radiateurs) et où la fonction de transport doit être éventuellement assisté activement par du pompage mécanique. Ces dispositifs de transfert de chaleur sont des dispositifs à boucle fluide. Ces boucles peuvent être monophasique pompée, diphasique à pompage capillaire ou diphasiqueà pompage mécanique . Les dispositifs à boucle fluide sont constituées de trois parties : un évaporateur, un radiateur et des lignes fluidiques souples ou rigides.

Les dispositifs à boucle fluide monophasique ont un principe de fonctionnement similaire à celui d'un chauffage central utilisant la chaleur sensible du fluide. Le fluide caloporteur (fréons™, eau, ammoniac, etc...) absorbe la puissance dissipée par les équipements en augmentant sa température à proximité des sources chaudes et rejette cette puissance en se refroidissant dans un ou plusieurs radiateurs sans changer d'état physique. La motricité du fluide est assurée par un système actif de pompage. Ce pompage mécanique effectué par une pompe alimentée électriquement assure le débit requis de fluide dans la boucle. Les pompes mécaniques, outre leur consommation énergétique peuvent engendrer des micro-vibrations parfois peu compatibles des autres équipements et instruments à bord du satellite. Par ailleurs, ces pompes peuvent présenter aussi une tenue en durée de vie contraignante pour la mission du satellite, tenue restreinte suite à l'usure prématurée de certaines pièces mécaniques internes à la pompe.

Les boucles fluides diphasiques utilisent, comme les caloducs, en plus de l'élévation en température, la chaleur latente de vaporisation du fluide pour absorber et rejeter la chaleur. Le fluide caloporteur change ainsi d'état lors de sa circulation dans la boucle. Il se vaporise en absorbant la chaleur dissipée par les équipements au niveau de l'évaporateur, et se condense en rejetant cette chaleur dans un ou plusieurs condenseurs situés au niveau du radiateur. Le fluide est mis en circulation soit par capillarité passivement dans la boucle soit à l'aide d'une pompe mécanique localisée en amont de l'évaporateur. Les phases vapeur et liquide sont séparées, hormis au niveau du condenseur et de l'évaporateur où elles circulent dans le même sens, contrairement au caloduc dans lequel les deux phases circulent en sens inverse dans le même tube. Ce type de dispositifs ne comporte une structure capillaire qu'au niveau de l'évaporateur.

Afin d'augmenter la capacité de rejet par radiation vers l'espace de la chaleur des satellites de nouvelle génération de forte puissance, l'utilisation de radiateurs déployables s'avère nécessaire pour augmenter les surfaces dissipatives disponibles sur le satellite. En effet, les surfaces du corps du satellite sont insuffisantes au vues des puissances à dissiper. Le principe du radiateur déployable est d'augmenter les surfaces radiatives disponibles sur le satellite en position déployée mais fait appel aussi à l'utilisation d'une boucle fluide, telle que présentée ci-dessus, afin d'amener la puissance à dissiper du réseau de caloducs supportant les équipements dissipatifs jusqu'aux surfaces radiatives du radiateur déployable tout en permettant le déploiement du radiateur avant sa mise en opération.

Pour les satellites de forte puissance nécessitant la présence de radiateurs déployables, plusieurs architectures sont possibles pour la collecte et le transport de la chaleur des équipements vers les radiateurs déployables. Soit la boucle fluide collecte la chaleur directement au pied des équipements et la transporte jusqu'aux surfaces radiatives des radiateurs, soit un réseau de caloducs se charge de collecter la chaleur au pied des équipements, la transporte vers des zones d'échange où les boucles fluides la récupère pour l'acheminer jusqu'au radiateur. La première solution est bien adaptée aux boucles fluides monophasiques tandis que la seconde est adaptée à tous les types de boucles.

Dans le cadre de la seconde solution, le réseau de caloducs comprend un premier réseau de caloducs, dit primaire, qui collecte et répartit la puissance à dissiper des équipements selon une direction privilégiée. Ces premiers caloducs sont soit intégrés au panneau qui les supportent, soit montés dessus. Un second réseau de caloducs, dits de couplage (ou traversants, dit de "crossing" en anglais), couplent entre eux les caloducs du réseau primaire selon une direction transverse. Ces premiers caloducs sont soit intégrés au panneau qui les supportent, soit montés dessus. La boucle fluide va permettre de coupler thermiquement la surface radiative du radiateur déployable où est installé le condenseur de la boucle fluide aux deux réseaux primaires et de couplage qui drainent la chaleur depuis les équipements. Comme expliqué ci-dessus, la boucle fluide comprend un évaporateur permettant de capter la puissance à dissiper des réseaux de caloducs des panneaux du satellite, une ligne vapeur pour amener la puissance à dissipervers un condenseur et une ligne de retour liquidepour alimenter à nouveau l'évaporateur. Un réservoir en amont de l'évaporateur permet le stockage du liquide non en circulation dans la boucle. Le condenseur est relié au radiateur dont les propriétés thermo-optiques sont adaptées pour assurer le rejet de la puissance vers le milieu extérieur. Les lignes vapeur et liquide peuvent être flexibles pour permettre le déploiement du radiateur.

L'efficacité du radiateur déployable (sa capacité derejet) est largement indexée au gradient thermique effectifs le long du chemin entre les équipements dissipatifs et la surface radiative. Au premier ordre, plus le gradient thermique est faible, plus le radiateur est efficace. Par ailleurs, plus le chemin thermique est court, plus le gradient est faible. En particulier, la température de fonctionnement de l'évaporateur est un élément clé de l'efficacité de la boucle.

Or, le transfert de chaleur s'effectuant principalement par conduction des équipements vers la surface radiative du radiateur hormis le transfert diphasique au sein des caloducs, toutes les zones et surfaces de contact et d'échange doivent être soigneusement minimisées en nombre, maximisées en surface et optimisées en qualité de contact thermique.

L'invention a donc pour objet de proposer un dispositif de transfert de chaleur qui permette une utilisation optimale des radiateurs, notamment déployables, par l'accroissement de la capacité de rejet thermique du satellite, et l'amélioration de l'efficacité du chemin thermique, cette dernière étant obtenue par l'augmentation de surfaces de contact aux noeuds de ce chemin thermique.

A cet effet, l'invention a pour objet un dispositif de transfert de chaleur comprenant au moins un canal de transfert thermique situé à proximité d'une source de dissipation de chaleur d'un satellite de manière à collecter la chaleur que la source est capable de dégager, un évaporateur et un condenseur. Dans le dispositif selon Invention
- l'évaporateur et le condenseur sont reliés par des lignes fluidiques de manière à constituer une boucle fluide en contact avec un réseau de canaux de transfert thermique,
- le réseau de canaux de transfert thermique comprend au moins deux caloducs de couplage et au moins un caloduc principal en contact direct avec la source,
- l'évaporateur est disposé parallèlement entre les deux caloducs de couplage, chacune des faces de l'évaporateur en regard des caloducs respectifs étant thermiquement couplée à la face en regard du caloduc, et la base de l'évaporateur constituant la troisième face est couplée à au moins un caloduc principal de manière à présenter, sur une partie de son parcours, une surface maximale de ses parois externes en contact avec celles des canaux de transfert thermique.

Ainsi, l'invention apporte un modèle d'évaporateur, un processus d'aménagement et d'intégration de l'évaporateur de la boucle fluide du radiateur déployable ainsi qu'une architecture satellite offrant à l'évaporateur une importante surface de contact, que ce soit avec un ou des caloducs primaires ou un ou des caloducs du réseau de couplage.

Selon un mode de réalisation de l'invention, l'axe principal de l'évaporateur étant disposé parallèlement aux axes principaux des deux cacaloducs de couplage auprès desquels il est agencé. Chacune des faces de l'évaporateur en regard des caloducs est thermiquement couplée à la face en regard du caloduc, ce couplage est réalisé par contact superficiel des ailettes des caloducs et de l'évaporateur.

Selon un mode de réalisation de l'invention, l'évaporateur est de section de forme à angles droits c'est à dire de section carrée ou rectangulaire.

Selon un mode de réalisation de l'invention, l'évaporateur est évidé de sa matière sur les faces qui ne présentent pas de contact avec les canaux de transfert thermique.

D'autres caractéristiques et avantages de la présente invention apparaîtront à la lecture de la description suivante des modes de réalisation de l'invention, donnés à titre illustratif et nullement limitatif.

Dans les figures suivantes :
- la figure 1 représente un schéma de principe d'une boucle fluide diphasique à pompage capillaire,
- la figure 2 représente schématiquement un satellite muni de radiateurs déployables,
- la figure 3 représente schématiquement un réseau de caloducs sur lequel sont aménagés des équipements électroniques montés sur la surface interne d'un panneau de satellite,
- la figure 4 représente une vue schématique, en coupe, d'une structure de satellite comportant un dispositif selon un mode de réalisation de l'invention,
- les figure 5a, 5c et 5e représentent schématiquement des vues en perspective de différents modes de réalisation de dispositifs selon l'invention, alors que la figure 5b, 5d et 5f représentent respectivement une vue en coupe de la figure 5a, 5c et 5e, les figures 6a à 6c illustrent des conformations différentes de l'évaporateur selon l'invention.

Dans toutes ces figures, les éléments remplissant les mêmes fonctions portent les mêmes numéros de référence.

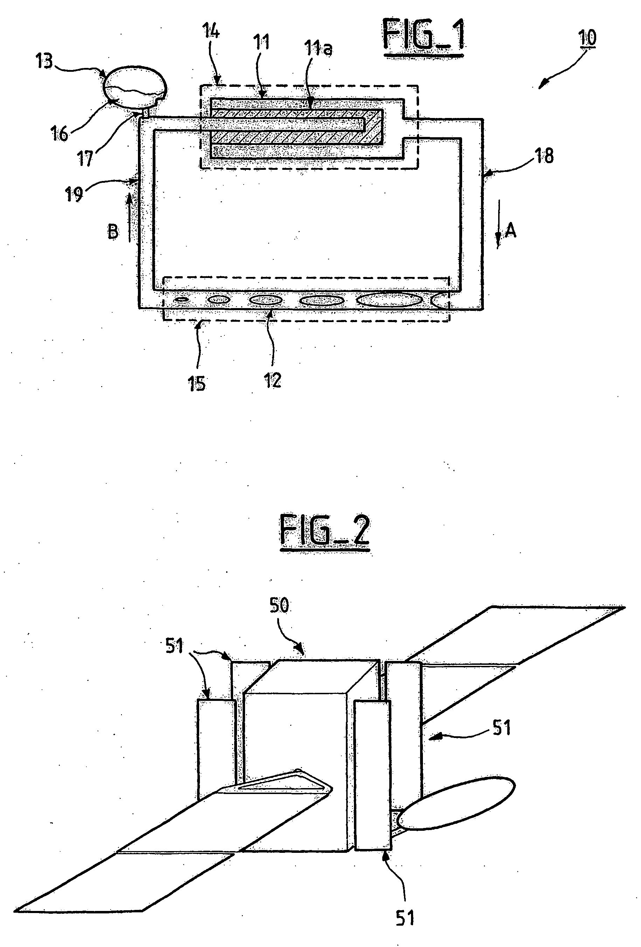

On va maintenant expliquer le principe de la boucle fluide diphasique à pompage capillaire en relation avec la figure 1.

On voit en figure 1 une boucle fluide diphasique à pompage capillaire 10 comprenant au mois un évaporateur 11, au moins un condenseur 12 et un réservoir 13. En trait mixte et de manière schématique sont représentés également la source de chaleur 14, c'est-à-dire les équipements (non représentés) dissipateurs de chaleur embarqués à bord d'un satellite, au voisinage de laquelle se trouve l'évaporateur 11, et la zone d'évacuation de la chaleur 15 située au niveau d'un panneau de radiateur déployable (non représenté) du satellite, et au voisinage de laquelle se trouve le condenseur 12.

Le réservoir 13 de fluide caloporteur 16, par exemple de l'ammoniac, alimente la boucle 10 en fluide au moyen d'une conduite 17. Le fluide 16, à l'état liquide symbolisé par des hachures sur la figure 1, pénètre dans l'évaporateur 11 où il est vaporisé. La vapeur ainsi générée (symbolisée par des points sur la figure 1) se déplace vers le condenseur 12 par une ligne de transport 18.

La vapeur est alors condensée en liquide au sein du condenseur 12 et revient vers l'évaporateur via une ligne de transport 19.

L'évaporateur 11 a une structure interne capillaire 11a. Il comporte sur sa surface interne des rainures longitudinales sur toute la circonférence s'étendant d'un bout à l'autre de sa longueur. Ainsi, le liquide arrivant dans l'évaporateur 11 traverse la mèche capillaire vers la paroi de l'évaporateur, où se trouve la puissance à dissiper. Il se vaporise alors sur la surface de la structure capillaire, où se forment des ménisques initiateurs de force capillaire. L'augmentation de pression capillaire dans la mèche est proportionnelle à la tension superficielle du fluide 16 et inversement proportionnelle au rayon équivalent des ménisques.

A sa sortie de la mèche capillaire de l'évaporateur 11, la vapeur est donc collectée dans l'enveloppe externe de l'évaporateur 11, en interface directe avec la source de chaleur 14. Du fait de la pression capillaire de pompage dans la boucle 10, cette vapeur est ensuite dirigée dans la ligne de vapeur et s'écoule jusqu'au condenseur 12.

Le réservoir pressuriseur 13 sert notamment à réguler la température de fonctionnement de la boucle 10 ainsi que pour l'amorçage de la boucle 10.

Les lignes de transport 18 et 19 sont de simples tubes induisant de faibles pertes de pression et sont légères ; elles peuvent être pliées facilement de par leur flexibilité intrinsèque. Elles ont un diamètre intérieur compris entre 4 et 10 mm.

Le radiateur déployable, quant à lui, comprend un ou plusieurs panneaux reliés mécaniquement entre eux par des moyens non représentés. Ces panneaux sont initialement (avant le lancement du satellite sur son orbite) repliés les uns sur les autres et le long du corps du satellite. Après le lancement du satellite et sa mise en orbite, ces panneaux sont déployés de manière à constituer une grande surface d'évacuation de la chaleur, maximisant ainsi leur capacité de rejet, et sont disposés de manière à présenter un facteur de vue minimum aux rayons incidents du soleil afin de minimiser les flux thermiques entrants qui détériore la performance du radiateur.

Pour ce type de satellites, la surface radiative nécessaire totale d'évacuation de la chaleur est très importante, typiquement de l'ordre de 60 m². Les radiateurs déployables sont disposés par exemple dans le prolongement des panneaux fixes du satellite parallèle au plan de l'orbite.

Pour illustrer une position typique des radiateurs déployables dans un satellite, on a représenté schématiquement en figure 2 un satellite 50 muni de quatre radiateurs déployables 51 (trois seulement sont visibles en figure 2). Ces radiateurs déployables sont mono-panneaux pour simplifier l'illustration, mais ils peuvent être remplacés par des radiateurs multi-panneaux.

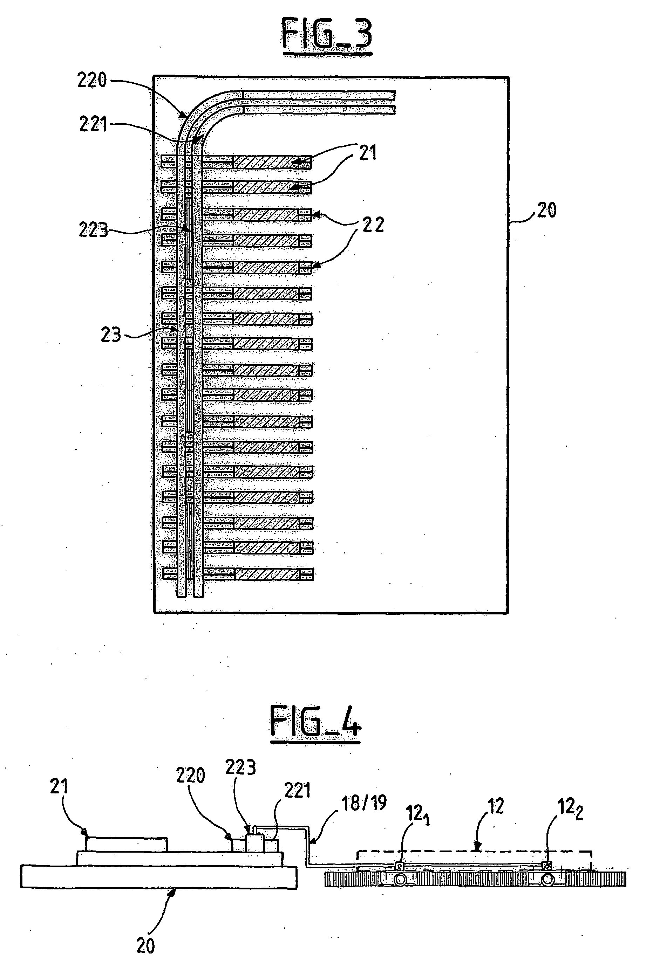

La figure 3 représente un réseau de caloducs sur un panneau 20 d'un module de communication, réseau sur lequel est installé un certain nombre d'équipements dissipatifs dont la présence est matérialisée sur la vue par leur empreinte 21 sur les caloducs. Parmi ces équipements, des Amplificateurs à Tubes à Ondes Progressives dits ATOP (ou TWTA pour "Travelling Wave Tube Amplifier" en anglais) sont communément intégrés, ces derniers ayant pour rôle l'amplification hyperfréquence de signaux avant qu'ils ne soient rediffusés vers la terre.

Ces tubes sont respectivement portés par un ou des caloducs 22 de transport et de répartition de la chaleur dégagée par le tube. Ces caloducs 22 appartiennent à un réseau principal de caloducs, sont intégrés ou supportés par le panneau de structure du module 20 et sont tous parallèles selon une première direction privilégiée. Un couple de caloducs 23 de couplage croise l'ensemble des caloducs 22 selon une direction transverse. Ce couple de caloducs comporte deux caloducs de couplage 220 et 221 entre lesquels se trouve agencé un évaporateur 223.

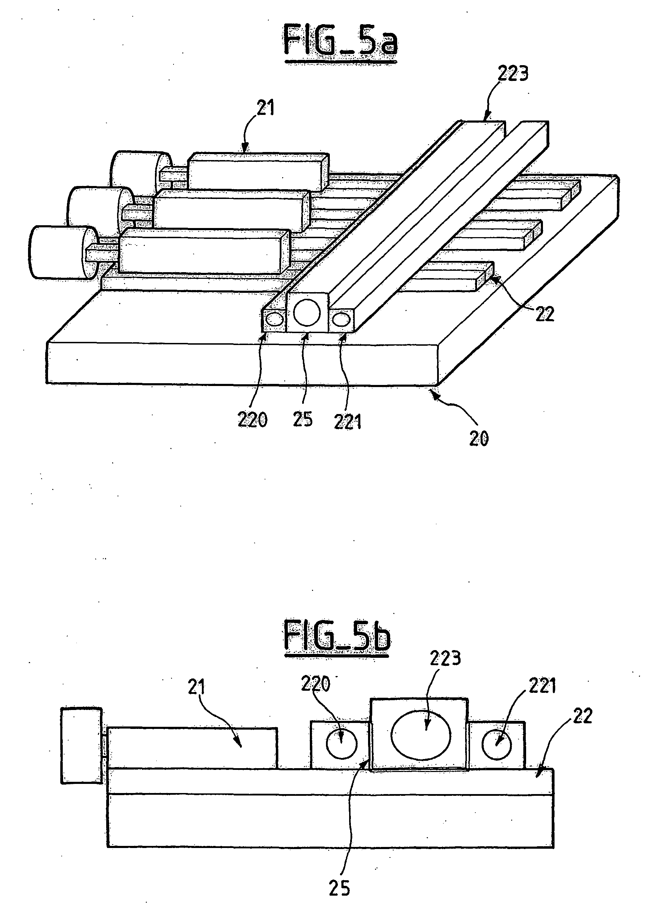

La figure 4 représente une vue en coupe du module 20. Les lignes de transport thermique 18 et 19 relient l'évaporateur 223 agencé au plus près de la source de chaleur qu'est l'équipement dissipatif à la zone d'évacuation de la chaleur située au niveau d'un panneau de radiateur déployable du satellite, et au voisinage de laquelle se trouve un condenseur 12 lui-même formé de deux circuits condenseurs 12₁ et 12₂ montés en parallèle.

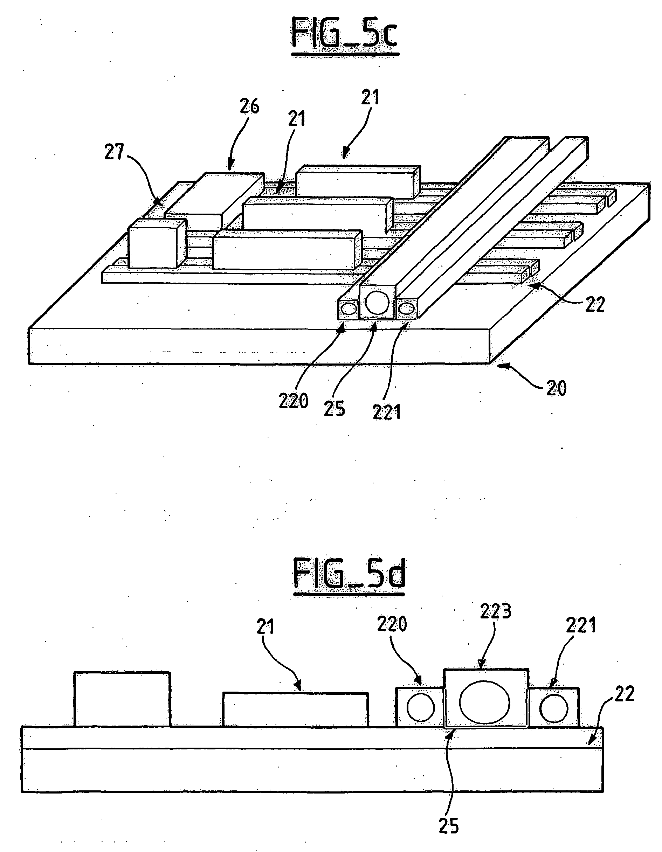

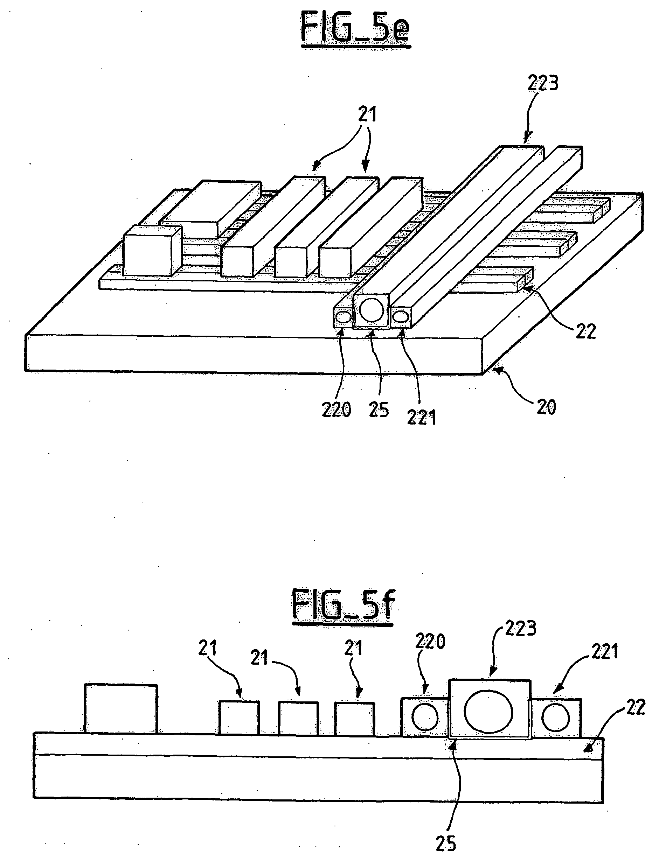

Les figures 5a, 5b et 5c représentent schématiquement des vues en perspective de modes de réalisation d'un dispositif selon l'invention alors que les figures 5b, 5d et 5e représentent des vues en coupe des figures 5a, 5b et 5c respectivement. Dans la figure 5a est représenté schématiquement trois amplificateurs ATOP 21, à collecteur rayonnant, montés chacun sur deux caloducs du réseau primaire. Ces caloducs croisent des caloducs de couplage 220, 221. Comme illustré, entre ces caloducs de couplage est intercalé l'évaporateur 223. Cet agencement judicieux permet de profiter d'une surface de contact 25 optimale pour le transfert de chaleur vers le condenseur 12. Selon ce mode de réalisation, l'évaporateur est donc à trois faces de contact utiles.

Dans la figure 5c est représenté schématiquement trois amplificateurs ATOP 21, à collecteur conductif, montés parallèlement au réseau de caloducs primaires ainsi que d'autres équipements dissipatifs tels que des amplificateurs à état solide 26 ("Solid State Power Amplifier" ou SSPA en anglais) et des filtres 27. Dans la figure 5e est représenté schématiquement trois amplificateurs ATOP 21, à collecteur conductif, montés perpendiculairement au réseau de caloducs primaires.

On comprend que l'invention tire son profit des surfaces de contact utiles pour la récupération de la chaleur transmise par l'équipement. En partant de cette constatation, les équipes de recherche de la Demanderesse ont élaboré différentes formes et configurations pour conformer l'évaporateur en recherchant non seulement l'optimisation voulue en termes de captation de chaleur mais également en termes de poids et autres facteurs critiques.

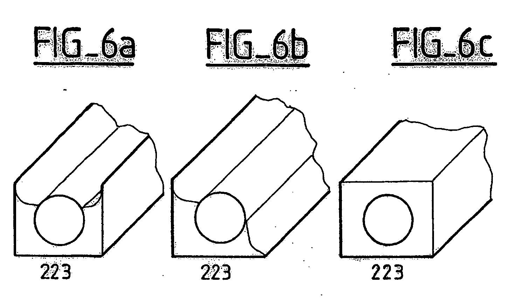

Ainsi, alors que la figure 6c reprend la forme de l'évaporateur des figures 4 et 5, la figure 6a illustre un évaporateur dont la face supérieure non utile car n'étant en contact ni avec un caloduc ni avec une autre source de chaleur, a été extrudée, à savoir évidée de sa matière. L'évaporateur de la figure 6b reprend le même principe d'évidement mais appliquée à deux faces de l'évaporateur (une face supérieure et une face latérale). En effet, autant les parois des faces de l'évaporateur en contact avec les parois des caloducs doivent être maximisées, autant les faces ne faisant pas l'objet d'échange doivent être minimisées, ceci apportant un effet supplémentaire de réduction de poids.

La présente invention n'est pas limitée aux modes de réalisation qui viennent d'être décrits. Ainsi, elle n'est pas limitée aux équipements tels qu'évoqués ci-dessus. Les amplificateurs ATOP peuvent également être à collecteur conductif montés longitudinalement au réseau de caloducs primaires ou montés transversalement au réseau de caloducs primaires. Les équipements peuvent être aussi des convertisseurs de puissance, des alimentations, des amplificateurs de puissance faible bruit, des préamplificateurs, des amplificateurs à état solide, des filtres, des équipements dédiées à la plate forme du satellite ou tout autre équipement dissipatif à bord de véhicules spatiaux.

En outre, comme il a été expliqué ci-dessus, le couplage par contact superficiel entre chacune des parois des faces utiles de l'évaporateur avec les parois respectives des caloducs en regard, est réalisé sur l'intégralité de la plus petite des deux surfaces en regard. Dans les modes de réalisation décrits, les parois de l'évaporateur sont plus grandes que celles des caloducs. Ceci n'empêche pas que la situation inverse n'apparaisse.

De même, on pourra imaginer tout type de configuration d'évidemment autre que ceux des figures 6a et 6b.

Enfin, on pourra remplacer tout moyen par un moyen équivalent sans sortir du cadre de l'invention.

## Revendications

1. Dispositif de transfert de chaleur comprenant au moins un canal (22,220,221) de transfert thermique situé à proximité d'une source (21) de dissipation de chaleur d'un satellite de manière à collecter la chaleur que la source est capable de dégager, un évaporateur (223) et un condenseur (12),
- l'évaporateur (223) et le condenseur (12) étant reliés par des lignes fluidiques (18, 19) de manière à constituer une boucle fluide (10) en contact avec un réseau de canaux de transfert thermique,
- le réseau de canaux de transfert thermique comprenant au moins deux caloducs de couplage (220,221) et au moins un caloduc principal (22) en contact direct avec la source (21), **caractérisé en ce que**
- l'évaporateur (223) est disposé parallèlement entre les deux caloducs de couplage (220,221), chacune des faces de l'évaporateur (223) en regard des caloducs (220,221) respectifs étant thermiquement couplée à la face en regard du caloduc (220,221), et la base de l'évaporateur (223) constituant la troisième face est couplée à au moins un caloduc principal (22) de manière à présenter, sur une partie de son parcours, une surface (25) maximale de ses parois externes en contact avec celles des canaux de transfert thermique.

2. Dispositif selon la revendication 1, dans lequel, chacune des faces de l'évaporateur en regard des canaux respectifs étant thermiquement couplée à la face en regard du canal, ce couplage est réalisée par contact superficiel des ailettes des canaux et de l'évaporateur.

3. Dispositif selon l'une des revendications 1 et 2, dans lequel l'évaporateur est de section de forme à angles droits c'est à dire de section carrée ou rectangulaire.

4. Dispositif selon l'une des revendications 1 à 3, dans lequel l'évaporateur est évidé de sa matière sur les faces qui ne présentent pas de surfaces de contact avec un canal de transfert thermique.

## Claims

1. Heat transfer system including at least one heat transfer passage (22, 220, 221) in the vicinity of a source (21) of dissipated heat on a satellite adapted to collect heat dissipated by the source, an evaporator (223) and a condenser (12),
- the evaporator (223) and the condenser (12) being connected by fluidic lines (18,19) to constitute a fluid loop (10) in contact with an array of heat transfer passages,
- the array of heat transfer passages including at least two coupling heat pipes (220,221) and at least one main heat pipe (22) in direct contact with the source (21), **characterized in that**
- the evaporator (223) is disposed parallel between the two coupling heat pipes (220,221), each of the faces of the evaporator (223) facing the respective heat pipes (220,221) being thermally coupled to the facing face of the heat pipe (220,221) and the base of the evaporator (223) constituting the third face is coupled to at least one main heat pipe (22) so as to have, over a portion of its path, a maximum area (25) of its external walls in contact with those of the heat transfer passages.

2. System according to claim 1, in which each face of the evaporator facing respective heat transfer passages is thermally coupled to the facing face of the passage by surface contact of fins of the passages and the evaporator.

3. System according to either claim 1 or claim 2, in which the evaporator has a cross section with a shape with right-angle corners, that is to say a square or rectangular cross section.

4. System according to any of claims 1 to 3, in which faces of the evaporator having no surfaces in contact with a heat transfer passage are hollowed out.

## Patentansprüche

1. Wärmetauschvorrichtung, die mindestens einen in der Nähe der Wärmeabgabequelle (21) eines Satelliten liegenden Wärmetauschkanal (22, 220, 221) beinhaltet, so dass die Wärme, die die Quelle abzugeben im Stande ist, gesammelt wird, einen Verdampfer (223) und einen Kondensator (12),
- wobei der Verdampfer (223) und der Kondensator (12) durch Fluidikleitungen (18, 19) verbunden sind, so dass eine Fluidikschleife (10) im Kontakt mit einem Wärmetauschkanalnetz gebildet wird,
- wobei das Wärmetauschkanalnetz mindestens zwei Kopplungswärmerohre (220, 221) und mindestens ein Hauptwärmerohr (22) in direktem Kontakt mit der Quelle (21) beinhaltet, **dadurch gekennzeichnet, dass**
- der Verdampfer (223) parallel zwischen den beiden Kopplungswärmerohren (220, 221) angeordnet ist, wobei jede der Seiten des Verdampfers (223) gegenüber den jeweiligen Wärmerohren (220, 221) thermisch an die Seite gegenüber dem Wärmerohr (220, 221) gekoppelt ist, und die Basis des Verdampfers (223), welche die dritte Seite bildet, an mindestens ein Hauptwärmerohr (22) gekoppelt ist, so dass sie auf einem Teil ihres Verlaufs, eine maximale Fläche (25) ihrer Außenwände in Berührung mit denjenigen der Wärmetauschkanäle aufweist.

2. Vorrichtung gemäß Anspruch 1, bei der jede der Seiten des Verdampfers gegenüber den jeweiligen Kanälen thermisch an die Seite gegenüber dem Kanal gekoppelt ist, wobei diese Kopplung durch Oberflächenkontakt der Lamellen der Kanäle und des Verdampfers erfolgt.

3. Vorrichtung gemäß einem der Ansprüche 1 oder 2, bei der der Verdampfer eine rechtwinklige Form hat, das heißt einen quadratischen oder rechteckigen Querschnitt.

4. Vorrichtung gemäß einem der Ansprüche 1 bis 3, bei der der Verdampfer an den Seiten, die keine Kontaktflächen mit einem Wärmetauschkanal aufweisen, Materialaussparungen hat.
